# EUROPEAN PATENT SPECIFICATION

(11) **EP 0 451 298 B1**
(45) Date of publication and mention of the grant of the patent: **27.09.1995**
(21) Application number: 90916079.8
(22) Date of filing: 01.11.1990
(51) Int. Cl.: B29C 45/76

(54) **METHOD OF SETTING MOLDING CONDITION IN INJECTION MOLDING MACHINE**
VERFAHREN ZUM EINSTELLEN DER ARBEITSBEDINGUNGEN EINER SPRITZGIESSMASCHINE
PROCEDE PERMETTANT DE DETERMINER LES CONDITIONS DE MOULAGE DANS UNE MACHINE DE MOULAGE PAR INJECTION

(30) Priority: 02.11.1989 JP 284832/89
(43) Date of publication of application: 16.10.1991
(73) Proprietor: FANUC LTD., Minamitsuru-gun, Yamanashi 401-05 (JP)
(72) Inventor: KAMIGUCHI, Masao Room 6-207 Fanuc Manshonharimomi, Minamitsuru-gun Yamanashi 401-05 (JP); NEKO, Noriaki Fanuc Dai-3 Vira-karamatsu, Yamanashi 401-05 (JP)
(74) Representative: Billington, Lawrence Emlyn
(86) International application number: JP9001409
(87) International publication number: WO9106416

(56) References cited:
- EP-A- 0 126 174
- EP-A- 0 216 939
- JP-A- 1 244 818
- JP-A-63 130 326
- PATENT ABSTRACTS OF JAPAN vol. 11, no. 360 (M-645)(2807) November 25, 1987 & JP-A-62 138 221 (MITSUBISHI HEAVY IND LTD) June 22, 1987
- PATENT ABSTRACTS OF JAPAN vol, 14, no. 361 (M-1006)(4304) August 6,1990 & JP-A-2 128 821 (TOSHIBA MACH CO LTD) May 17, 1990
- PATENT ABSTRACTS OF JAPAN vol. 14, no. 361 (M-1006)(4304) August 6, 1990 & JP-A-2 128 821 (TOSHIBA MACH CO LTD ) May 17, 1990

## Description

The present invention relates to an injection molding condition setting method for an injection molding machine, in which injection molding conditions are set in accordance with accurate information displayed on a display device.

In an injection molding machine using a screw, a plasticized object of injection material is fed forward with rotation of the screw while it is stirred. Then, the screw is advanced in the axial direction to inject the injection material object into a mold. As a result, a molded product of the injection object, having a predetermined shape, is formed in the mold.

The quality of molded products depends on the time-based change of pressure (injection pressure) acting on the injection object at the time of injection. Accordingly, it is necessary to obtain the characteristic of an ideal pressure curve, which is indicative of the change of the injection pressure with time.

In this respect, some of conventional injection molding machines are so designed as to display set values of injection molding conditions, by which the injection pressure, etc. are determined, on the screen of a graphic display unit in accordance with an NC program, as disclosed in Japanese Provisional Patent Publication No. 61-106219. Upon modification of these set values, the injection molding machine operates to inject the injection object with the modified injection pressure characteristic. Other injection molding machines are so designed as to display a pressure curve indicative of the injection pressure characteristic on the screen of the graphic display unit in accordance with a control program, as disclosed in Japanese Provisional Patent Publication No. 61-125830.

In the conventional injection molding machines, however, a process of displaying and setting the injection molding conditions is different from a process of displaying the pressure curve, so that the injection molding conditions and the pressure curve cannot be simultaneously displayed on the screen of the graphic display unit. In the case of ascertaining and modifying the set injection molding conditions based on the preceding pressure curve characteristic, therefore, an operation of changing the display on the graphic display unit is required between when the injection molding condition is set and when the pressure curve is ascertained. As a consequence, if the injection molding conditions are displayed on the graphic display unit, for example, a user will be delayed in setting the conditions, and will not be able to detect a change, if any, of the pressure curve characteristic during the setting operation. Thus, even if the pressure curve characteristic changes during the setting operation in the injection molding machine, the modification of the injection molding conditions sometimes may be made solely on the basis of the injection molding conditions obtained before the change of the pressure curve. Thus, a difficulty will be encountered such that the injection molding conditions cannot be accurately modified in dependence on the change of the pressure curve.

EP-A-0126174 discloses a molding condition setting method according to the preamble of attached claim 1, whilst EP-A-0216939 discloses an injection molding machine wherein there is displayed the relationship between screw positions and back pressures.

The object of the present invention is to provide a molding condition setting method for an injection molding machine, in which injection molding conditions can be set on the basis of accurate information on a change of pressure of an injection object with time or with screw position, so that the efficiency of the injection molding condition setting operation can be improved,

According to the present invention there is provided a molding condition setting method for an injection molding machine arranged to perform movement control of a screw in accordance with set injection molding conditions and execute an injection process for injecting a plasticized injection material, the method comprising: detecting information on a time-based parameter in said injection process; and controlling display means to display change of said parameter corresponding to the parameter information detected; the method being characterised by: said parameter being pressure acting on the injection material; controlling the display means to display information on set values of injection molding conditions, simultaneously with the pressure change, when the display of the injection molding conditions is selected; and setting the injection molding conditions in response to a modification by an operator of said displayed set value information, the modification being executed in dependence upon the displayed pressure change.

According to the present invention, as described above, a change of pressure of the injection material in the injection process with time or screw position, setting items of the injection molding conditions, and set value information are simultaneously displayed by means of the display means. Accordingly, the injection molding conditions can be set with reference to accurate information on the time-based pressure change of the injection material. As a result, according to the present invention, the efficiency of the injection molding condition setting operation can be improved.

### Brief Description of the Drawings

Fig. 1 is a functional block diagram showing an injection molding machine for embodying a molding condition setting method according to one embodiment of the present invention;
Fig. 2 is a diagram showing an example of display of a pressure curve and injection molding conditions according to the one embodiment of the present invention;
Fig. 3 is a diagram showing a pressure curve according to the one embodiment of the present invention; and
Fig. 4 is a flow chart illustrating a molding condition setting process executed by means of the injection molding machine of Fig. 1.

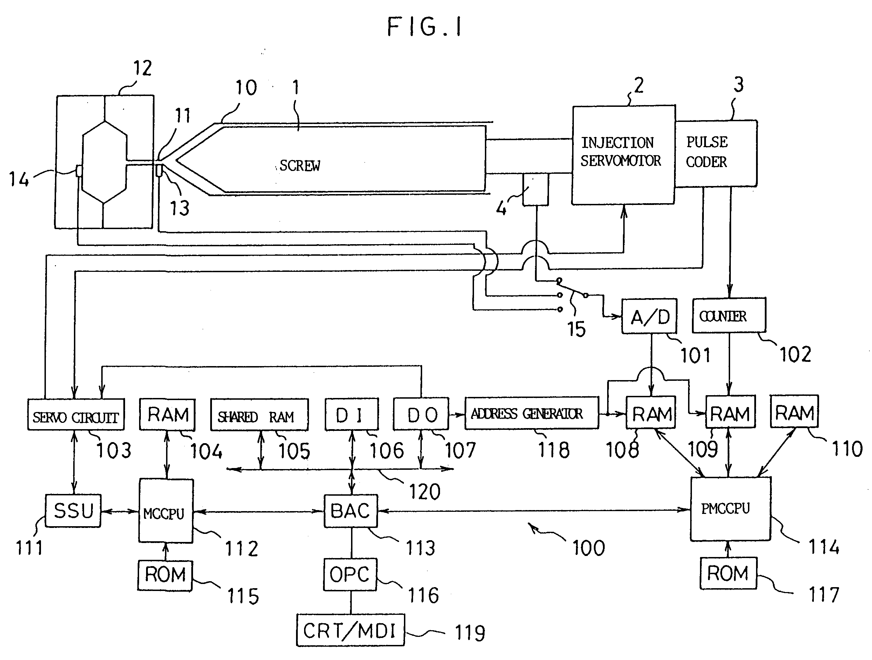

In Fig. 1, a cylinder 10 is filled with resin for use as an injection object. Disposed in the cylinder 10 is a screw 1, which is driven to rotate by means of a servomotor (not shown) for screw rotation, thereby feeding the resin forward from the screw while stirring the resin. The screw 1 is arranged to be driven to move axially in the cylinder 10 by a servomotor 2 for injection, thereby injecting the forwardly fed resin into a mold 12 through a nozzle 11 of the cylinder 10. The servomotors for screw rotation and injection, and servomotors (not shown) for clamping and ejector operation are controlled by means of a servo circuit 103.

The rotary shaft of the injection servomotor 2 is fitted with a pulse coder 3 which operates to output pulse signals corresponding to the rotational angle of the injection servomotor 2, thereby detecting the present position of the screw 1. The output pulses from the pulse coder 3 are successively integrated by means of a counter 102, and the integrated counter value is stored in a RAM 109 for screw position data, in a manner corresponding to a predetermined sampling period of an address generator 118. The screw 1 is further provided with an injection pressure sensor 4 for detecting a reaction force, as the injection pressure of the resin, which acts in the axial direction of the screw during injection. The detected injection pressure is A/D-converted in an A/D converter 101, and is then stored in a RAM 108 for pressure data in a manner corresponding to the predetermined sampling period of the address generator 118. The address generator 118 successively delivers addresses to the RAMs 108 and 109 at intervals of the predetermined sampling period. More specifically, the address generator 118 successively outputs addresses, starting from a zeroth address, at intervals of the predetermined sampling period, after the generator is once cleared in response to an injection start command supplied from a PMCCPU 114 through a bus arbiter controller (hereinafter referred to as BAC) 113 and an output circuit 107. Hereinafter, the output from the address generator 118 will be referred to as a sampling command. According to the present invention, the injection pressure can be detected solely by the injection pressure sensor 4. Alternatively, however, the nozzle 11 and the mold 12 may be also provided with injection pressure sensors 13 and 14, respectively, as in the embodiment shown in Fig. 1, so that the injection pressure can be selectively detected by means of a changeover switch 15.

A numerical control device (hereinafter referred to as NC device) 100 comprises a microprocessor (hereinafter referred to as NCCPU) 112 for numerical control connected through the BAC 113, and a CPU 114 for a programmable machine controller (hereinafter referred to as PMC). The NCCPU 112 is connected with the servo circuit 103 through a serve interface 111, and is also connected with a RAM 104 and a ROM 115.

The servo circuit 103 is connected with the injection servomotor 2, the pulse coder 3, and the output circuit 107, besides the servo interface 111. The servo circuit 103 is operable to drive the injection servomotor 2 in accordance with the pulse signals delivered from the pulse coder 3 and a torque limit value for controlling the output torque of the injection servomotor 2 outputted from the output circuit 107. The RAM 104 is temporarily stored with data for use in the NCCPU 112, and the like. The ROM 115 is stored with a management program according to which the CPU 112 generally controls the operation of the injection molding machine.

The PMCCPU 114 is connected with the RAM 108 for pressure data, the RAM 109 for screw position data, a RAM 110, and a ROM 117. The RAM 110 is stored with an execution program for the PMC. The ROM 117 is stored with a sequence program for controlling the sequence operation of the injection molding machine, and the like.

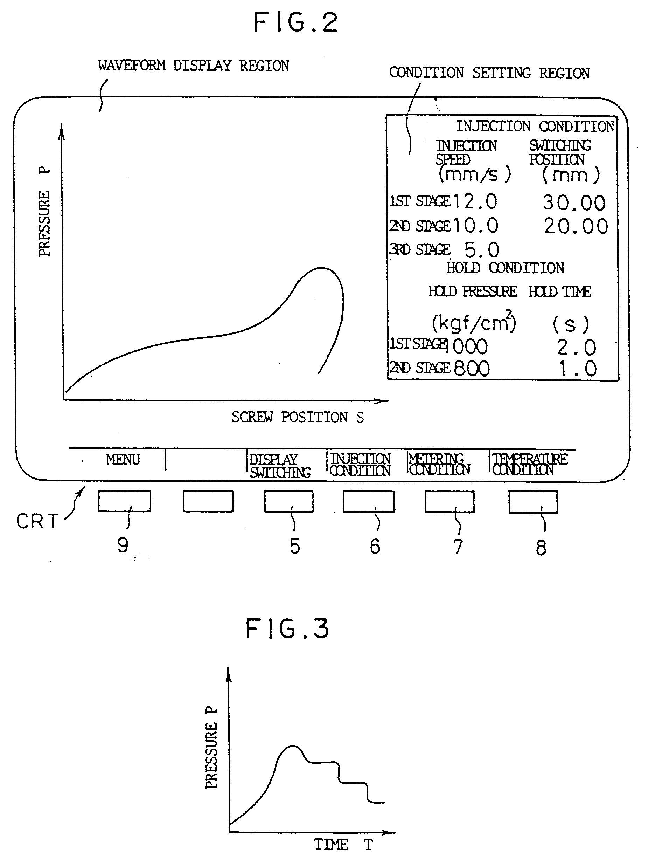

The BAC 113 is connected with a shared RAM 105, an input circuit 106, and the output circuit 107 by means of the bus 120, and is also connected with the NCCPU 112, the PMCCPU 114, and an operator panel controller 116. The BAC 113 is operable to execute bus arbitration to meet data requirements (for data such as programs) from the NCCPU 112 and the PMCCPU 114 and the like, and output desired data. The operator panel controller 116 is connected with a manual data input device (hereinafter referred to as CRT/MDI) 119 mounted with a CRT display unit, which functions as a graphic display unit. As shown in Figs. 2 and 3, the CRT/MDI 119 operates to display set values of injection molding conditions, a pressure curve indicative of a time-based injection pressure used in one injection process, etc. on the screen of the CRT display unit. Further, the CRT/MDI 119 is so designed as to display the entry of various set data and a menu for use as a work object on the screen of the CRT display unit, and make menu selection in response to the operation of various operating keys (software keys, ten-keys, etc.).

The shared RAM 105, which is a nonvolatile RAM formed of a bubble memory or CMOS memory, comprises a memory section and a set memory section. The memory section is stored with an NC program for controlling the individual operations of the injection molding machine and the like, while the set memory section is stored with parameters of various molding conditions, such as injection, hold, and metering conditions, cylinder temperature, etc., various set values, macro variables, and the like.

In the NC device 100, on the basis of the NC program stored in the shared RAM 105, the various molding conditions, and the sequence program stored in the ROM 117, the PMCCPU 114 performs sequence control, while the NCCPU 112 distributes pulses for driving the injection servomotor 2 to the servo circuit 103 through the servo interface 111, thereby controlling the injection molding machine. The hardware configuration of these elements is similar to those of a conventional electric-powered injection molding machine.

The following is a description of a sampling process for the screw position and injection pressure according to the present invention.

Information on the injection pressure detected by the injection pressure sensor 4, and information on the screw position detected by the pulse coder 3 and the counter 102 are stored in a manner corresponding to common addresses of the RAMs 108 and 109 in response to the sampling command front the address generator 118. Namely, the output of the sampling command from the address generator 118 is started simultaneously when the injection of the injection molding machine is started in response to the injection start command from the PMCCPU 114. The information on the injection pressure and on the screw position for the up-to-date injection process is stored in the common address of the RAMs 108 and 109 at intervals of the predetermined sampling period, after the start of injection.

Table 1 illustrates the relationship between the injection pressure and the screw position with respect to the time elapsed after the start of injection, wherein T represents the time elapsed after the start of injection measured by the use of a sampling period γ ; A, the common address of the RAMs 108 and 109; P the injection pressure for each sampling cycle; and S, the screw position.

This sampling process ends when the injection ends, and the information stored in the RAMs 108, 109 is held until the next injection cycle starts and is reset simultaneously when the next injection cycle starts. Subsequently, a similar sampling process is repeatedly executed.

**Table 1**

| | | | |
|---|---|---|---|
| Elapsed Time T | γ | 2γ ... | iγ ... |
| Address A | 1 | 2 ... | i ... |
| Screw Position S | S1 | S2 ... | Si ... |
| Injection Pressure P | P1 | P2 ... | Pi ... |

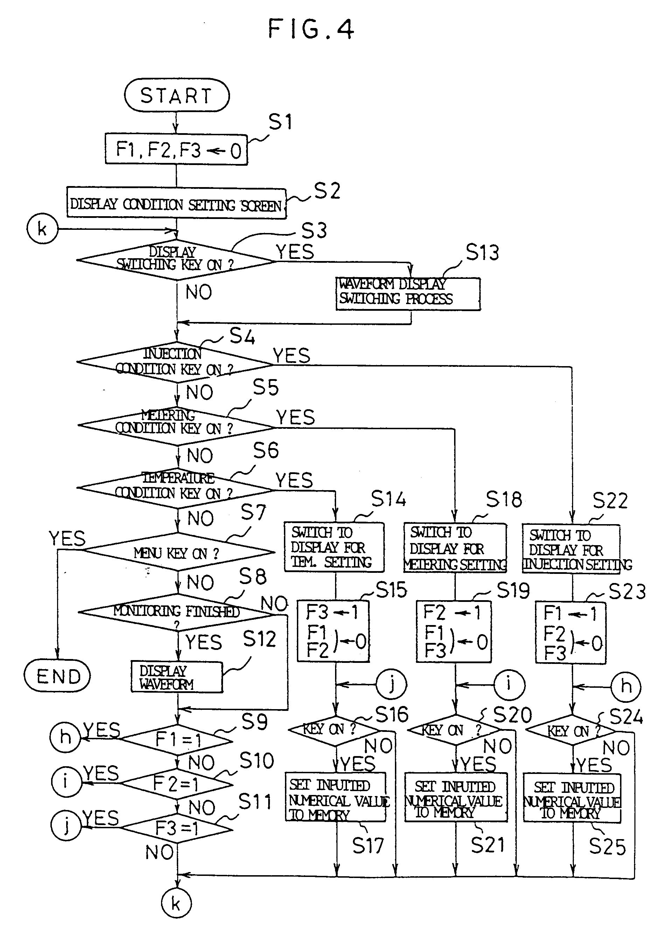

Next, with reference to the flow chart of Fig. 4, an injection molding condition setting method of the present embodiment will be described. In this embodiment, it is supposed that various injection molding conditions are already initialized and set in the set memory section of the shared RAM 105, and that the drive of the injection molding machine is controlled in accordance with these conditions. Flags F1 to F3 are flags which, provided corresponding to the various injection molding conditions, are used to select setting items for setting predetermined injection molding conditions. If the flags F1 to F3 are "1," they indicate a state in which the setting items concerned are selected. If the flags F1 to F3 are "0," they indicate a state in which the setting items concerned are not selected.

A setting process operation for the injection molding conditions is started when the aforesaid setting process is selected by means of a function menu key (software key) 9 of the CRT/MDI 119.

When the setting process operation for the injection molding conditions is started, the PMCCPU 114 resets the flags F1, F2 arid F3 (Step S1). Then, the display on the screen of the CRT display unit is switched to a display for injection molding condition setting, and some of the software keys of the CRT/MDI 119 are assigned individually as a display switching key 5, an injection condition setting key 6, a metering condition setting key 7, and a temperature condition setting key 8 (Step S2).

In the processes of Steps S3 to S7, a determination is made as to whether or not any of the assigned software keys 5 to 9 has been operated. Normally, the software keys 5 and 9 cannot be operated immediately after the start of the setting process, so that all the decisions in Steps S3 to S7 become negative (NO).

Thereupon, the PMCCPU 114 determines whether or not monitoring is finished (Step S8). More specifically, a determination is made in Step S8 as to whether or not all the information on the injection pressure and on the screw position for the up-to-date injection process is sampled and stored in the data RAMs 108, 109.

If the currently executed process is the injection process, then it indicates that a sampling command for the information on the injection pressure and the screw position is being executed. Thus, the decision in Step S8 becomes negative.

In the processes of Steps S9 to S11, it is determined whether or not the flags F1, F2 and F3 for setting item selection are reset. In the present phase, all the flags F1, F2 and F3 for setting item selection are reset, so that all the decisions in Steps S9 to S11 are negative. Then, the setting process operation of the PMCCPU 114 returns to Step S3, whereupon the same setting process as aforesaid is executed.

When the end of the monitoring is ascertained in Step S8 while the discrimination processes of Steps S3 to S11 are being repeatedly executed, the PMCCPU 114 proceeds to the process of Step S12. In Step S12, the PMCCPU 114 reads sampled information (information obtained by executing the sampling command) on the injection pressure stored in the RAM 108 for pressure data, and sampled information on the screw position stored in the RAM 109 for screw position data. Then, a pressure curve corresponding to the sampled information on the injection pressure is graphically displayed on the screen of the CRT display unit in accordance with a waveform display system selected in the preceding injection molding condition setting process (Step S12). This graphically displayed region is the waveform display region shown in Fig. 2.

If a waveform display system, indicative of the relationship between the screw position and the injection pressure, is selected in the preceding injection molding condition setting process, the PMCCPU 114 displays a pressure curve in a rectangular coordinate system in which the screw position and the injection pressure are respectively taken along abscissa S and ordinate P. More specifically, in the present embodiment, a screw position Si and an injection pressure Pi stored as sampled information in the same addresses of the RAMs 108, 109 are considered as forming a pair in the rectangular coordinate system, and points (Si, Pi), each composed of a corresponding one pair, are successively plotted on the waveform display region of the CRT display unit, whereby the pressure curve indicative of the relationship between the screw position and the injection pressure is displayed (see Fig. 2). On the other hand, if a waveform display system indicative of the relationship between the time elapsed after the start of injection and the injection pressure is selected in the preceding injection molding condition setting process, the PMCCPU 114 displays a pressure curve in a rectangular coordinate system in which the time elapsed after the start of injection and the injection pressure are respectively taken along abscissa T and ordinate P. Namely, an elapsed time iγ corresponding to the sampling period after the start of injection and the injection pressure Pi for each sampling period are considered as forming a pair in the rectangular coordinate system, and points (iγ, Pi) each composed of a corresponding one pair are successively plotted on the waveform display region of the CRT display unit, whereby the pressure curve indicative of the relationship between the time elapsed after the start of injection and the injection pressure is displayed (see Fig. 3). These individual waveform display systems are selected in response to the operation of the display switching key 5. More specifically, if an operator operates the display switching key 5, the PMCCPU 114 detects an on-state of the display switching key 5 in Step S3. Then, the PMCCPU 114 assigns subprograms of a waveform display process to be executed in Step S12 by a switching process operation for the waveform display. In the present embodiment, the subprograms include a subprogram for executing a waveform display indicating the relationship between the screw position and the injection pressure, and a subprogram for executing a waveform display indicating the relationship between the time elapsed after the start of injection and the injection pressure. In the waveform display switching process, these subprograms are alternately assigned by the on-off operation of the display switching key 5. In the waveform display switching process, moreover, the currently assigned subprogram is held until the display switching key 5 is operated again. Therefore, in the waveform display process immediately after the start of the injection molding condition setting process, the pressure curve is displayed in accordance with the waveform display system selected in the preceding injection molding condition setting process unless the display switching key 5 is operated.

If the display switching key 5 is operated immediately after the injection molding condition setting process is started and before the waveform display process is executed, the PMCCPU 114 concludes that a subprogram different from the one selected in the preceding process is assigned, and executes a waveform display process in accordance with the subprogram concerned. Since the pressure curve is not displayed before the waveform display process is executed, however, the operator cannot identify the waveform display system which is selected at the present point of time or which is permitted to be selected by operating the display switching key 5. Thus, it is insignificant to operate the display switching key 5 before the waveform display process is executed. On the other hand, in case that the PMCCPU 114 is enabled to cause the CRT display unit to visually display the currently selected waveform display system or the operator is permitted to discriminate the waveform display system with reference to the operating position of the display switching key 5, it is useful to operate the display switching key 5 before the waveform display process is executed.

In usual, the PMCCPU 114 causes the pressure curve to be tentatively displayed on the screen of the CRT display unit with use of the waveform display system selected under the preceding injection molding conditions, whereby the PMCCPU 114 allows the operator to identify the currently selected waveform display system. Then, in response to the operation of the display switching key 5 at the operator's request, the PMCCPU selects the desired waveform display system.

Further, the PMCCPU 114 causes the RAMs 108 and 109 to hold the information on the pressure curves displayed on the waveform display region until the next injection cycle ends. If the end of the monitoring is ascertained in Step S8 when the next injection cycle ends, the PMCCPU 114 causes the pressure curve for the up-to-date injection process to be displayed on the screen of the CRT display unit by executing the same waveform display process as aforesaid.

As a result, the waveform display region and the condition setting region are provided on the screen of the CRT display unit, and the pressure curve, the injection molding condition setting items, and the current set values thereof can be simultaneously displayed on the waveform display region and the condition setting region.

Thus, the operator, observing the pressure curve displayed on the screen of the CRT display unit, can recognize the injection molding condition setting items to be modified in order to make the pressure curve an ideal one. In setting the injection molding conditions, therefore, the screen need not be changed, so that the efficiency of tie injection molding condition setting operation is improved.

Next, the operator operates the software keys for those setting items which are to be modified, among the injection condition setting key 6, the metering condition key 7, and the temperature condition setting key 8 corresponding to the setting items. When the software keys are operated, the PMCCPU 114 starts display processes for the details of the individual setting items and the current set values and processes for condition setting.

The following is a description of a processing operation of the PMCCPU 114 in the present embodiment executed in response to the operation of the injection condition setting key 6.

When the operator operates the injection condition setting key 6 while the discrimination processes of Steps S3 to S11 are being repeatedly executed, the PMCCPU 114 detects this operation in Step S4. The details of the setting items associated with the injection conditions and the current set values are displayed in the condition setting region on the screen of the CRT display unit (Step S22). In the present embodiment, the injection stage number, injection switching position, hold stage number, and hold time are displayed as the details of the setting items in the condition setting region. Also displayed in the condition setting region are numerical values (initial values in this case) which are stored as the current set values in the set memory section of the shared RAM 105, in a manner corresponding to the aforesaid individual items.

The PMCCPU 114 resets the flags F2 and F3 for setting item selection, sets the flag F1 for setting item selection, and stores the RAM 110 with the fact that the processes for injection condition setting are started (Step S23). Then, the PMCCPU 114 discriminates the presence/absence of a ten-key entry through the CRT/MDI 119 (Step S24).

If there is no ten-key entry, the processing operation of the PMCCPU 114 returns to Step S3, whereupon the discrimination processes of Steps S3 to S9 are executed. At this stage, the flag F1 for setting item selection is already set, so that the PMCCPU 114 executes the discrimination process of Step S9, and then proceeds to the process of Step S24. If there is no ten-key entry in Step S24, the discrimination processes of Steps S3 to S9 and Step S24 are repeatedly executed. Then, if the end of the monitoring is ascertained in the discrimination process of Step S8, the pressure curve for the up-to-date injection process is displayed on the screen of the CRT display unit, whereupon the program proceeds to the discrimination process of Step S9.

While the PMCCPU 114 is repeatedly executing the aforementioned processing operation, the operator, observing the displayed pressure curve, operates a cursor shift key of the CRT/MDI 119, thereby selecting the desired setting items from the details of the setting items displayed in the condition setting region on the screen of the CRT display unit, and operates the ten-keys to input new set values.

When the new set values inputted by means of the ten-keys are detected in Step S24, the PMCCPU 114 changes the display from the current set values of the setting items displayed in the condition setting region to the new set values. Further, the PMCCPU 114 causes the new set values to be stored in those storage regions of the set memory section of the shared RAM 105 which correspond to the aforesaid setting items, thereby updating the current set values (Step S25).

Thus, the injection operation of the injection molding machine can be controlled on the basis of the new current set values, updated in Step S25, in the next injection process and its subsequent ones. As the set molding conditions are modified in this manner, the characteristic of the pressure curve displayed in the waveform display region gradually changes. When the monitoring ends, however, the pressure curve for the up-to-date injection process is always displayed in the waveform display region, as in Steps S8 and S12.

Thereupon, the operator, observing the newly displayed pressure curve, determines whether or not the characteristic of this pressure curve is an ideal pressure curve characteristic. In other words, the operator determines whether or not the modification of the injection conditions is proper, and if necessary, selects any desired setting items by means of the software keys, and enters new set values by means of the ten-keys. In response to the entry of the new set values, the PMCCPU 114 further updates the injection conditions in the same manner as aforesaid.

**Table 2**

| | Metering Conditions | | |
|---|---|---|---|
| | Rotational Rate (rpm) | Back Pressure (kg/cm²) | Switching Position (mm) |
| First stage | 200 | 80 | 10.00 |
| Second stage | 150 | 60 | 18.00 |
| Third stage | 50 | 50 | 30.00 |
| Screw-back | | 35.00 (mm) | |
| Suck-back amount | | 5.00 (mm) | |
| Suck-back speed | | 10.0 (mm/s) | |

If the operator concludes that the metering conditions, cylinder temperature, etc. must be modified, moreover, he or she operates the metering condition setting key 7 or the temperature condition setting key 8. If the operation of the software key 7 or 8 is detected in Step S5 or S6, the PMCCPU 114 starts processes for metering condition setting or processes for temperature condition setting. The PMCCPU 114 executes the metering condition setting processes in Steps S18 to S21 or the temperature condition setting processes in Steps S14 to S17. Tables 2 and 3 illustrate examples of the setting items of the metering and temperature conditions displayed in the condition setting region on the screen of the CRT display unit. Since the flow of these processes is substantially the same as that of the processes for injection condition setting described before in connection with Steps S22 to S25, a detailed description of the process flow is omitted.

**Table 3**

| | Temperature Conditions | |
|---|---|---|
| | Set Values | Current Temperature |
| Nozzle | 240 (°C) | 235 (°C) |
| Front of cylinder | 233 (°C) | 236 (°C) |
| Back of cylinder | 249 (°C) | 244 (°C) |

If the PMCCPU 114 repeats the aforementioned injection molding condition setting processes to modify the various set values, including the injection conditions, metering conditions, cylinder temperature, etc., thereby obtaining an ideal pressure curve, the operator operates the function menu key 9 of the CRT/MDI 119 to select another display screen. When the function menu key 9 is operated, the PMCCPU 114 detects this operation (Step S7), whereupon the injection molding condition setting processes are finished.

Thus, according to the molding condition setting method of the present embodiment, the set values can be accurately modified even if the characteristic of the pressure curve fails to be stabilized at once due to the modification of the set cylinder temperature, which changes with a slow follow-up, or if the characteristic of the pressure curve fails to be stabilized at once due to the modification of the set metering conditions (e.g., screw-back), whose response to phenomena is slow, or if the molding condition setting is delayed. This is because the pressure curve for the up-to-date injection process can always be displayed on the screen of the CRT display unit according to the present embodiment.

## Claims

1. A molding condition setting method for an injection molding machine arranged to perform movement control of a screw in accordance with set injection molding conditions and execute an injection process for injecting a plasticized injection material, the method comprising:
detecting information on a time-based parameter in said injection process; and
controlling display means to display change of said parameter corresponding to the parameter information detected;
the method being characterised by:
said parameter being pressure acting on the injection material;
controlling the display means to display information on set values of injection molding conditions, simultaneously with the pressure change, when the display of the injection molding conditions is selected; and
setting the injection molding conditions in response to a modification by an operator of said displayed set value information, the modification being executed in dependence upon the displayed pressure change.

2. A molding condition setting method for an injection molding machine according to claim 1, wherein information on the pressure of the injection material acting in the axial direction of the screw is detected as the pressure information in said information detecting.

3. A molding condition setting method for an injection molding machine according to claim 1 or 2, wherein information on a pressure acting on the injection material when it is injected by means of the screw is detected as pressure information in said information detecting.

4. A molding condition setting method for an injection molding machine according to any preceding claim, wherein information on a pressure acting on the injection material when it is filled into a mold is detected as pressure information in said information detecting.

5. A molding condition setting method for an injection molding machine according to any preceding claim, wherein a pressure change for each predetermined time elapsed after the start of injection, or a pressure change for each predetermined position of the moving screw, is displayed on the display means as the displayed change of pressure.

6. A molding condition setting method for an injection molding machine according to claim 5, wherein one pressure change specified out of the pressure changes for each predetermined time elapsed after the start of injection, and/or each predetermined position of the moving screw, is displayed on the display means.

7. A molding condition setting method for an injection molding machine according to any preceding claim, wherein the display means includes a graphic display unit.

8. A molding condition setting method for an injection molding machine according to any preceding claim, wherein the displayed set values of the injection molding conditions include a plurality of injection speeds and information indicative of positions for switching the injection speeds.

## Patentansprüche

1. Gießbedingungs-Einstellverfahren für eine Spritzgießmaschine, die derart eingerichtet ist, daß sie eine Bewegungssteuerung einer Förderschnecke in Übereinstimmung mit eingestellten Gießbedingungen durchführen und einen Einspritzprozeß zum Einspritzen eines plastizierten Einspritzmaterials ausführen kann, wobei das Verfahren Schritte umfaßt zum
Erfassen von Information über einen zeitbasisbezogenen Parameter in dem Einspritzprozeß und
Steuern eines Anzeigemittels, um eine Änderung des Parameters anzuzeigen, die der erfaßten Parameter-Information entspricht,
welches Verfahren dadurch **gekennzeichnet** ist, daß
der Parameter ein Druck ist, der auf das Einspritzmaterial wirkt,
das Steuern des Anzeigemittels, um Information über die eingestellten Werte der Spritzgießbedingungen anzuzeigen, gleichzeitig mit der Druckänderung durchgeführt wird, wenn eine Betriebsart zum Anzeigen der Spritzgießbedingungen ausgewählt ist, und
das Einstellen der Spritzgießbedingungen in Reaktion auf eine Modifizierung der Information über die angezeigten eingestellten Werte durch eine Bedienungsperson durchgeführt wird, wobei die Modifizierung in Abhängigkeit von der angezeigten Druckänderung ausgeführt wird.

2. Gießbedingungs-Einstellverfahren für eine Spritzgießmaschine nach Anspruch 1, bei dem Information über den Druck des Einspritzmaterials, der in axialer Richtung der Förderschnecke wirkt, als die Druckinformation bei der Informationserfassung erfaßt wird.

3. Gießbedingungs-Einstellverfahren für eine Spritzgießmaschine nach Anspruch 1 oder 2, bei dem Information über einen Druck, der auf das Einspritzmaterial wirkt, wenn es mittels der Förderschnecke eingespritzt wird, als Druckinformation bei der Informationserfssung erfaßt wird.

4. Gießbedingungs-Einstellverfahren für eine Spritzgießmaschine nach einem der vorhergehenden Ansprüche, bei dem Information über einen Druck, der auf das Einspritzmaterial wirkt, wenn es in eine Gießform eingefüllt wird, als Druckinformation bei der Informationserfassung erfaßt wird.

5. Gießbedingungs-Einstellverfahren für eine Spritzgießmaschine nach einem der vorhergehenden Ansprüche, bei dem eine Druckänderung für jede vorbestimmte Zeitperiode, die nach dem Start der Einspritzung verstrichen ist, oder eine Druckänderung für jede vorbestimmte Position der sich bewegenden Förderschnecke auf dem Bildschirm des Anzeigemittels als die angezeigte Druckänderung angezeigt wird.

6. Gießbedingungs-Einstellverfahren für eine Spritzgießmaschine nach Anspruch 5, bei dem eine Druckänderung, die aus den Druckänderungen für jede vorbestimmte Zeitperiode, die nach dem Start der Einspritzung verstrichen ist, und/oder jede vorbestimmte Position der sich bewegenden Förderschnecke bestimmt ist, auf dem Bildschirm des Anzeigemittels angezeigt wird.

7. Gießbedingungs-Einstellverfahren für eine Spritzgießmaschine nach einem der vorhergehenden Ansprüche, wobei das Anzeigemittel eine Graphik-Anzeigeeinheit enthält.

8. Gießbedingungs-Einstellverfahren für eine Spritzgießmaschine nach einem der vorhergehenden Ansprüche, bei dem die angezeigten eingestellten Werte der Einspritzgießbedingungen eine Vielzahl von Einspritzgeschwindigkeiten und Information, die bezeichnend für Positionen zum Wechseln der Einspritzgeschwindigkeiten ist, enthalten.

## Revendications

1. Un procédé permettant de déterminer les conditions de moulage dans une machine de moulage par injection prévue pour effectuer la commande du mouvement d'une vis en accord avec des conditions déterminées de moulage par injection et d'effectuer un processus d'injection pour injecter une matière d'injection à l'état plastique, le procédé comprenant :
la détection d'informations sur un paramètre basé sur le temps dans ledit processus d'injection ; et
la commande de moyens de visualisation pour afficher le changement dudit paramètre correspondant aux informations ainsi détectée du paramètre ;
le procédé étant caractérisé par :
le fait que ledit paramètre est une pression agissant sur la matière d'injection ;
la commande des moyens de visualisation pour afficher des informations sur des valeurs déterminées des conditions de moulage par injection, en même temps que le changement de pression, lorsque l'affichage des conditions de moulage par injection est choisi ; et
la détermination des conditions de moulage par injection en réponse à une modification par un opérateur desdites informations de valeurs déterminées qui ont été affichées, la modification étant effectuée en dépendance du changement de pression affiché.

2. Un procédé permettant de déterminer les conditions de moulage dans une machine de moulage par injection selon la revendication 1, dans lequel des informations sur la pression de la matière d'injection agissant dans le sens axial de la vis sont détectées en tant qu'informations de pression dans ladite opération de détection d'informations.

3. Un procédé permettant de déterminer les conditions de moulage dans une machine de moulage par injection selon la revendication 1 ou 2 dans lequel les informations sur une pression agissant sur la matière d'injection lorsqu'elle est injectée au moyen de la vis sont détectées en tant qu'informations de pression dans ladite opération de détection d'informations.

4. Un procédé permettant de déterminer les conditions de moulage dans une machine de moulage par injection selon une revendication précédente quelconque dans lequel les informations sur une pression agissant sur la matière d'injection lorsqu'elle remplit un moule sont détectées en tant qu'informations de pression dans ladite opération de détection d'informations.

5. Un procédé permettant de déterminer les conditions de moulage dans une machine de moulage par injection selon une revendication précédente quelconque, dans lequel un changement de pression pour chaque temps prédéterminé écoulé après le début de l'injection, ou un changement de pression pour chaque position prédéterminée de la vis mobile, est affiché sur les moyens de visualisation en tant que changement de pression affiché.

6. Un procédé permettant de déterminer les conditions de moulage dans une machine de moulage par injection selon la revendication 5, dans lequel un changement de pression spécifié en dehors des changements de pression pour chaque temps prédéterminé écoulé après le début de l'injection, et/ou chaque position prédéterminée de la vis mobile, est affiché sur les moyens de visualisation.

7. Un procédé permettant de déterminer les conditions de moulage dans une machine de moulage par injection selon une revendication précédente quelconque, dans lequel les moyens de visualisation comprennent une unité d'affichage graphique.

8. Un procédé permettant de déterminer les conditions de moulage dans une machine de moulage par injection selon une revendication précédente quelconque, dans lequel les valeurs déterminées des conditions de moulage par injection qui ont été affichées comprennent un ensemble de vitesses d'injection et des informations indiquant les positions pour commuter les vitesses d'injection.
